# EUROPEAN PATENT SPECIFICATION

(11) **EP 4 187 762 B1**
(45) Date of publication and mention of the grant of the patent: **11.11.2026**
(21) Application number: 22209263.7
(22) Date of filing: 24.11.2022
(51) Int. Cl.: H02K 15/12

(54) **JIG PLATE DESIGNING METHOD**
ENTWURFSVERFAHREN FÜR EINE SPANNPLATTE
PROCÉDÉ DE CONCEPTION DE PLAQUE DE GABARIT

(30) Priority: 29.11.2021 JP 2021193310
(43) Date of publication of application: 31.05.2023
(73) Proprietor: TOYOTA BOSHOKU KABUSHIKI KAISHA, Kariya-shi, Aichi 448-8651 (JP)
(72) Inventor: KITAHARA, Makoto, Kariya-shi (JP)
(74) Representative: TBK

(56) References cited:
- JP-A- 2019 134 566
- JP-A- 2019 140 842

## Description

### BACKGROUND

### 1. Field

The present disclosure relates to a method for designing a jig plate used in an apparatus for manufacturing a rotor core of an interior permanent magnet motor.

### 2. Description of Related Art

The rotor core of an interior permanent magnet motor includes a core body and magnets. The core body is formed by stacking core sheets, and has a center hole and magnet housing holes. The magnets are inserted into the respective magnet housing holes and fixed to the core body with thermosetting plastic.

A known type of an apparatus for manufacturing such a rotor core fixes magnets to a core body by filling magnet housing holes with thermosetting plastic and thermally setting the plastic (see, for example, Japanese Laid-Open Patent Publication No. 2019-140842). JP 2019 140842 A discloses a method for designing a jig plate according to the preamble of claim 1. A further method for designing a jig plate is known from JP 2019 134566 A.

The above-described apparatus includes a spacer on which the core body is placed. The apparatus also includes restriction pins attached to the spacer at positions that correspond to the magnet housing holes. The restriction pins project from the upper surface of the spacer. Since the lower surfaces of the magnets are lifted to be higher than the upper surface of the spacer by the restriction pins, the magnets can be fixed to the core body in a state in which the magnets are disposed at the center of the core body in the axial direction.

The shape of the magnet housing holes varies depending on the type of the rotor core. Therefore, spacers (hereinafter, referred to as jig plates) of different arrangements of restriction pins are required for different types of rotor cores. As a result, the number of types of jig plates increases by the number of types of rotor cores, and management of the jig plates is troublesome.

### SUMMARY

It is an objective of the present disclosure to provide a jig plate designing method that reduces the number of types of jig plates.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

One general aspect of the present disclosure provides a jig plate designing method for designing a jig plate used for an apparatus for manufacturing a rotor core of an interior permanent magnet motor. The jig plate includes a plate body and pins. The plate body includes a placement surface on which a core body is placed. The core body includes a center hole and magnet housing holes. The pins protrude from the placement surface and come into contact with lower surfaces of magnets housed in the magnet housing holes. The jig plate is capable of being used for core bodies of different types that have a same number of the magnet housing holes. The core bodies of the different types have different shapes of the magnet housing holes and/or different positions of the magnet housing holes. The magnet housing holes of the core bodies of the different types have regions in which the magnet housing holes overlap with each other in an axial direction of the core bodies. The jig plate designing method includes positioning the pins in the regions.

Other features and aspects will be apparent from the following detailed description, the drawings, and the claims.

### BRIEF DESCRIPTION OF THE DRAWINGS

Fig. 1 is a perspective view showing a rotor core manufactured using a jig plate that is designed by a jig plate designing method according to one embodiment.
Fig. 2 is a vertical cross-sectional view showing the rotor core according to the embodiment.
Fig. 3 is a vertical cross-sectional view showing, together with the rotor core, a rotor core manufacturing apparatus according to the embodiment.
Fig. 4 is a plan view showing a core body placed on the jig plate according to the embodiment.
Fig. 5 is an enlarged plan view showing a part of Fig. 4.
Fig. 6 is an enlarged plan view corresponding to Fig. 5, showing a core body placed on a jig plate according to a first modification.
Fig. 7 is an enlarged plan view corresponding to Fig. 5, showing a core body placed on a jig plate according to a second modification.
Fig. 8 is a vertical cross-sectional view corresponding to Fig. 3, showing, together with a rotor core, an apparatus for manufacturing a rotor core, the apparatus including a jig plate, according to a third modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

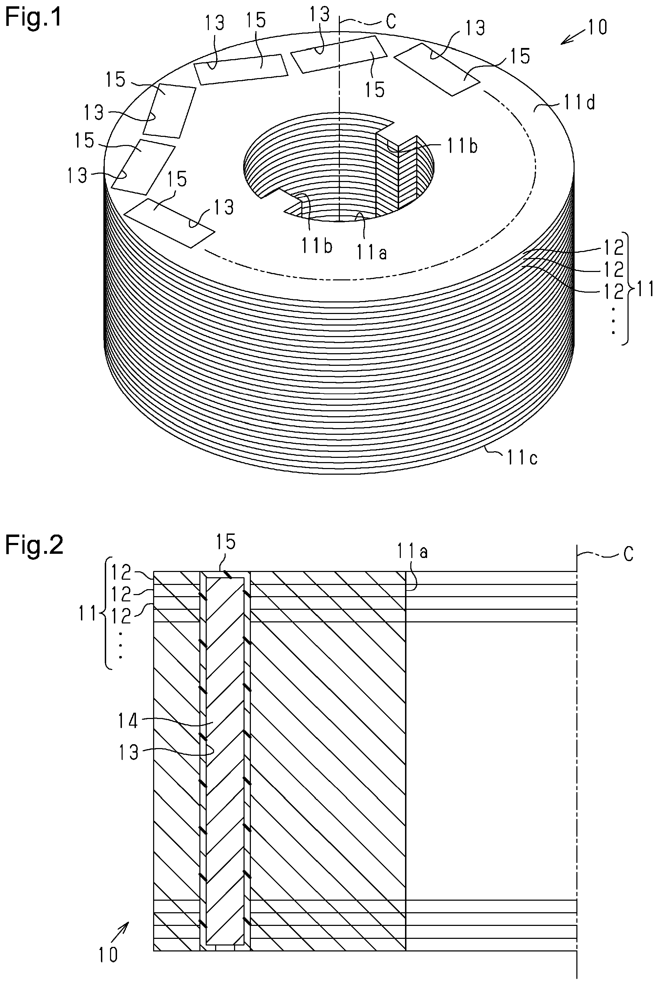

A jig plate designing method according to one embodiment will now be described with reference to Figs. 1 to 5.

First, a rotor core 10 of an interior permanent magnet motor manufactured using a jig plate according to the present embodiment will be described with reference to Figs. 1 and 2.

As shown in Figs. 1 and 2, the rotor core 10 includes a core body 11, which includes a laminated body. The laminated body is formed by stacking core sheets 12, which include magnetic steel sheets. The core body 11 is substantially shaped as a cylinder having an axis C.

In the following description, the radial direction of the core body 11 will simply be referred to as a radial direction, and the circumferential direction of the core body 11 will simply be referred to as a circumferential direction.

The core body 11 includes a center hole 11a and magnet housing holes 13. The magnet housing holes 13 are located on the radially outer side of the center hole 11a and arranged at intervals in the circumferential direction. The center hole 11a and the magnet housing holes 13 extend through the core body 11 in the axial direction (vertical direction in Figs. 1 and 2).

The magnet housing holes 13 of the present embodiment each have a substantially rectangular shape in plan view and are inclined in relation to the circumferential direction.

As shown in Fig. 1, the core body 11 includes two key portions 11b on the inner circumferential surface of the center hole 11a to be opposed to each other in the radial direction of the core body 11.

As shown in Fig. 2, each magnet housing hole 13 receives two rectangular parallelepiped magnets 14, which extend along the axis C of the core body 11.

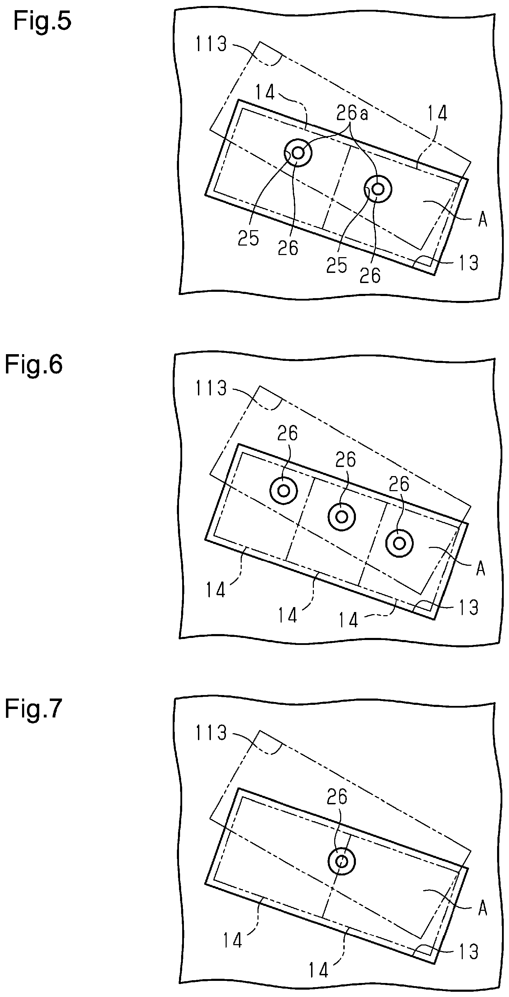

As indicated by the long-dash double-short-dash lines in Fig. 5, the two magnets 14 are arranged adjacent to each other in the direction of the long sides of the magnet housing hole 13. Each magnet housing hole 13 is filled with a plastic 15 for fixing the magnet 14. The plastic 15 is preferably a thermosetting plastic such as an epoxy resin.

The core body 11 of the present embodiment includes multiple blocks each including core sheets 12 stacked together. The core sheets 12 of each block include known joint portions (not shown), which are formed by the embossing technique to protrude from one side in the stacking direction (the axial direction). The core sheets 12 adjacent to each other are coupled together by press-fitting the protrusions of the coupling portions in one of the core sheets 12 into the recesses of the coupling portions in the other core sheet 12. One end of each block includes a dummy core sheet 12 having holes (not shown) formed by punching out the joint portions. The dummy core sheet 12 is adjacent to a core sheet 12 in the same block and another core sheet 12 in a different block. The dummy core sheet 12 is joined to the core sheet 12 in the same block, but is not joined to the core sheet 12 in the different block. Therefore, the blocks of the core body 11 are separated from each other before the plastic 15 is provided in the magnet housing holes 13.

An apparatus for manufacturing the rotor core 10 will now be described.

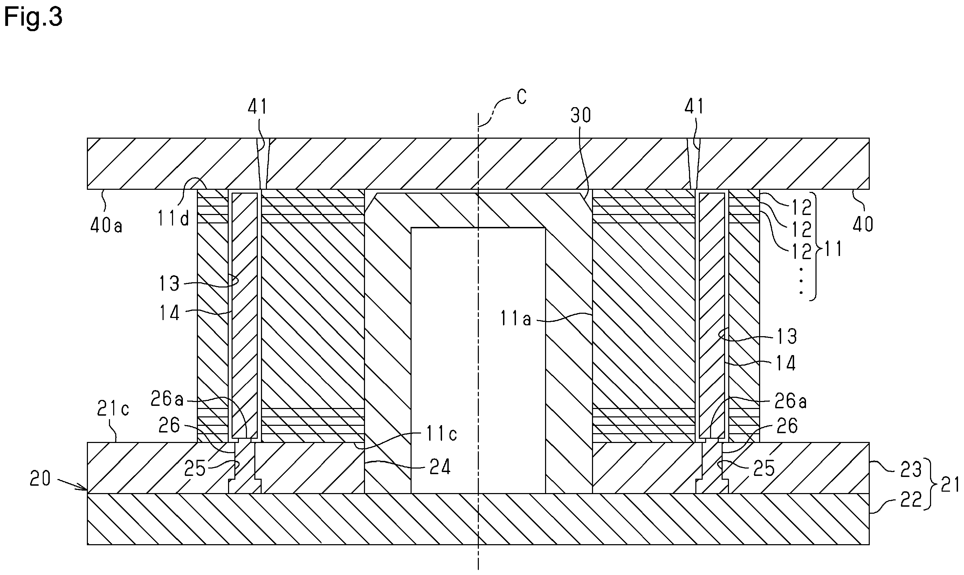

As shown in Fig. 3, the manufacturing apparatus includes a jig plate 20 and a cull plate 40.

### <Jig Plate 20>

As shown in Fig. 3, the jig plate 20 includes a plate body 21, pins 26, and a post portion 30.

The plate body 21 includes a lower plate 22 and an upper plate 23, which is arranged on the upper surface of the lower plate 22.

The post portion 30 is cylindrical and protrudes from a center part of the lower plate 22. The post portion 30 is inserted into the center hole 11a of the core body 11.

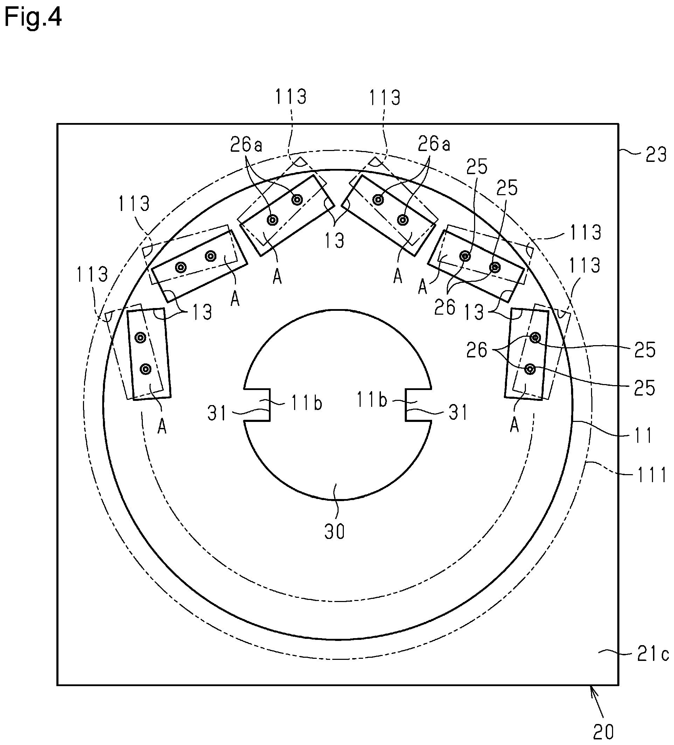

The post portion 30 includes two keyways 31, which extend in the axial direction, on the outer circumferential surface. The key portions 11b of the core body 11 are inserted into the keyways 31 (refer to Fig. 4). When the key portions 11b of the core body 11 are inserted into the keyways 31 of the post portion 30, the phase of the core body 11 with respect to the lower plate 22, more specifically, the phase of each block forming the core body 11 is determined.

The upper plate 23 includes a through-hole 24, which has a substantially circular shape in plan view centered on the axis C.

Two restricting projections (not shown) are provided on the inner circumferential surface of the through-hole 24. The restricting projections are inserted into the two keyways 31 of the post portion 30 to position the upper plate 23 in relation to the lower plate 22. In a state in which the post portion 30 is in the through-hole 24 of the upper plate 23, a lower surface 11c of the core body 11 is in contact with an upper surface 21c of the upper plate 23.

As shown in Figs. 3 and 4, the upper plate 23 includes insertion holes 25 at positions overlapping with the magnet housing holes 13 in the axial direction. Two insertion holes 25 are provided for each magnet housing hole 13. Two pins 26 are inserted into and fixed to the two insertion holes 25 from below.

Each pin 26 includes a protruding portion 26a, which protrudes upward from the upper surface 21c of the upper plate 23.

The jig plate 20 of the present embodiment can be used for two different types of core bodies 11, 111, in which the numbers of magnet housing holes 13, 113 are the same but the positions of the magnet housing holes 13, 113 are different.

The magnet housing holes 13, 113 of the present embodiment have the same shape.

As shown in Fig. 4, the magnet housing holes 113 are shifted radially outward from the magnet housing holes 13.

As shown in Figs. 4 and 5, the magnet housing holes 13, 113 of the core bodies 11, 111 of different types have regions A in which the magnet housing holes 13, 113 overlap with each other in the axial direction of the core bodies 11, 111.

Each region A has an elongated shape in plan view. A direction orthogonal to both the longitudinal direction of the region A and the axial direction in plan view is defined as a width direction.

The two pins 26, more specifically, the two protruding portions 26a, are positioned in the region A.

The two pins 26 are disposed at the center in the width direction of the region A.

### <Cull Plate 40>

A shown in Fig. 3, the cull plate 40 is placed on an upper surface 11d of the core body 11. A lower surface 40a of the cull plate 40 is brought into contact with the upper surface 11d of the core body 11.

The cull plate 40 includes filling ports 41 for injecting the plastic 15 into the magnet housing holes 13 of the core body 11 at intervals in the circumferential direction. Each filling port 41 extends through the cull plate 40 in the thickness direction and is connected to two of the magnet housing holes 13.

In the present embodiment, the upper surface 21c of the upper plate 23 corresponds to a placement surface of the present disclosure. The key portions 11b of the core body 11 each correspond to an engaging portion of the present disclosure. The keyways 31 of the post portion 30 each correspond to an engagement portion of the present disclosure.

Next, a procedure of fixing the magnets 14 to the core body 11 by using the manufacturing apparatus in which the jig plate 20 of the present embodiment is employed will be described.

First, the core body 11 is placed on the upper surface 21c of the upper plate 23 of the jig plate 20, and then the magnets 14 are inserted into the magnet housing holes 13 of the core body 11. At this time, the key portions 11b are inserted into the keyways 31. In each magnet housing hole 13, the lower surfaces of the magnets 14 are in contact with the protruding portions 26a of the pins 26 above the lower surface 11c of the core body 11. As a result, downward displacement of the magnet 14 is restricted, and the magnet 14 is positioned in the axial direction.

Next, the cull plate 40 is placed on the upper surface 11d of the core body 11 as shown in Fig. 3.

In this state, the plastic 15 is supplied to the filling ports 41. The plastic 15 is injected into the magnet housing holes 13 of the core body 11 through the filling ports 41. In Fig. 3, the plastic 15 is not shown.

Next, the entire manufacturing apparatus is heated by a heating device to thermally set the thermosetting plastic 15, thereby fixing the magnets 14 to the core body 11.

Operation of the present embodiment will now be described.

As shown in Fig. 5, the magnets 14 housed in the magnet housing hole 13, 113 of either core body 11, 111 come into contact with the upper surfaces of the pins 26 corresponding to the magnets 14. Thus, the same jig plate 20 can be used for the core bodies 11, 111 of different types.

The present embodiment has the following advantages.
(1) The magnet housing holes 13, 113 of the core bodies 11, 111 of different types have the regions A, in which the magnet housing holes 13, 113 overlap with each other in the axial direction of the core bodies 11, 111, and the pins 26 are positioned in the regions A.

This method, which operates in the above described manner, allows the number of types of the jig plate 20 to be reduced.

(2) The pins 26 are disposed at the center in the width direction of the region A.

If the pins 26 were positioned closer to the magnet housing hole 13 of the first core body 11 in the width direction of the region A, the pins 26 would approach the center of the end faces of the magnets 14 housed in the magnet housing hole 13. On the other hand, the pins 26 would be separated from the center of the magnets 14 housed in the magnet housing hole 113 of the second core body 111. As a result, the magnet 14 housed in the magnet housing hole 113 of the second core body 111 may be supported in an unstable manner.

In this regard, the above-described method prevents the magnet 14 from being supported in an unstable manner.

(3) The jig plate 20 includes the post portion 30, which protrudes from the plate body 21 and is inserted into the center hole 11a. The post portion 30 includes, in the outer circumferential surface, the keyways 31, into which the key portions 11b on the inner circumferential surface of the center hole 11a are inserted.

With this method, the key portions 11b provided in the center hole 11a of the core body 11 are engaged with the keyways 31 provided in the outer peripheral surface of the post portion 30, so that the core body 11 is positioned in the circumferential direction of the post portion 30. Accordingly, the core body 11 is easily positioned with respect to the jig plate 20.

### <Modifications>

The above-described embodiment may be modified as follows. The above-described embodiment and the following modifications can be combined as long as the combined modifications remain technically consistent with each other.

The jig plate 20 may lack the post portion 30. In this case, a post portion may be provided on a stationary base located below the jig plate 20, and a through-hole into which the post portion is inserted may be provided in the plate body.

In the above-described embodiment, the protruding portions 26a of the pins 26 are arranged at the center of the region A in the width direction. However, the arrangement of the protruding portions 26a may be changed within the region A. Even in this case, it suffices if the magnets 14 are positioned at specified positions in the magnet housing hole 13 by being supported from below.

The number of the magnets 14 accommodated in each magnet housing hole 13 is not limited to two, but may be one or three. For example, when three magnets 14 are housed in each magnet housing hole 13 as shown in Fig. 6, three pins 26 are provided in the region A so as to correspond to the three magnets 14, respectively.

When two magnets 14 are housed in each magnet housing hole 13 as shown in Fig. 7, a single pin 26 may be provided at the border of the two magnets 14.

The above-described embodiment illustrates the jig plate 20 that can be used for two different types of core bodies 11, 111, in which the numbers of magnet housing holes 13, 113 are the same, but the positions of the magnet housing holes 13, 113 are different. In place of this, the present disclosure may be embodied as a jig plate that can be used for different types of core bodies having the same number of magnet housing holes, but different shapes of the magnet housing holes. Alternatively, the present disclosure may be embodied as a jig plate that can be used for different types of core bodies having the same number of magnet housing holes, but different shapes and positions of the magnet housing holes.

In the above-described embodiment, the plate body 21 is formed by the lower plate 22 and the upper plate 23. However, the lower plate 22 may be omitted, and the post portion 30 may be fixed to the upper plate 23.

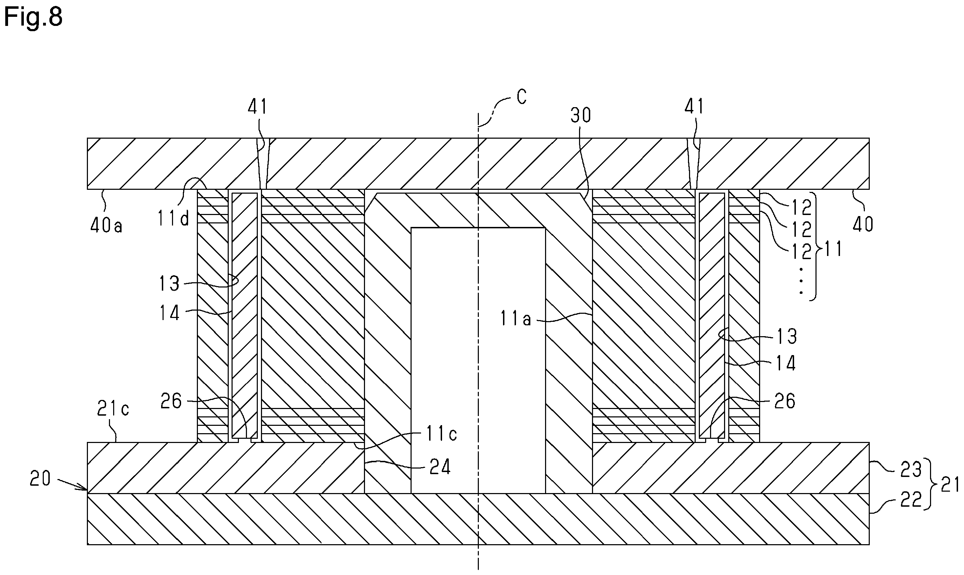

In the above-described embodiment, the plate body 21 and the pins 26 are separate components. However, the present disclosure is not limited thereto. As shown in Fig. 8, the pins 26 may be formed by protruding some parts of the upper surface of the plate body 21.

Various changes in form and details may be made to the examples above without departing from scope of the claims. The examples are for the sake of description only, and not for purposes of limitation.

## Claims

1. A jig plate designing method for designing a jig plate (20) used for an apparatus for manufacturing a rotor core (10) of an interior permanent magnet motor, wherein
the jig plate (20) includes:
a plate body (21) including a placement surface (21c) on which a core body (11) is placed, the core body (11) including a center hole (11a) and magnet housing holes (13); and
pins (26) that protrude from the placement surface (21c) and come into contact with lower surfaces of magnets (14) housed in the magnet housing holes (13),
the jig plate (20) is capable of being used for core bodies (11, 111) of different types that have a same number of the magnet housing holes (13, 113), the core bodies (11, 111) of the different types having different shapes of the magnet housing holes (13, 113) and/or different positions of the magnet housing holes (13, 113), and
the magnet housing holes (13, 113) of the core bodies (11, 111) of the different types have regions (A) in which the magnet housing holes (13, 113) overlap with each other in an axial direction of the core bodies (11, 111),
**characterized in that**
the jig plate designing method comprises positioning the pins (26) in the regions (A).

2. The jig plate designing method according to claim 1, wherein
each region (A) has an elongated shape in plan view,
a direction orthogonal to both a longitudinal direction of each region (A) and the axial direction in plan view is defined as a width direction, and
the jig plate designing method comprises disposing each pin (26) at a center in the width direction of a corresponding one of the regions (A).

3. The jig plate designing method according to claim 1 or 2, wherein
the jig plate (20) includes a post portion (30) that protrudes from the plate body (21) and is inserted into the center hole (11a), and
the jig plate designing method further comprises providing, in an outer circumferential surface of the post portion (30), an engagement portion (31) into which an engaging portion (11b) provided on an inner circumferential surface of the center hole (11a) is inserted.

## Patentansprüche

1. Spannvorrichtungsplattengestaltungsverfahren zum Gestalten einer Spannvorrichtungsplatte (20), die für ein Gerät zum Herstellen eines Rotorkerns (10) eines Innenpermanentmagnetmotors verwendet wird, wobei die Spannvorrichtungsplatte (20) Folgendes hat:
einen Plattenkörper (21) mit einer Platzierungsfläche (21c), an der ein Kernkörper (11) platziert wird, wobei der Kernkörper (11) ein Mittelloch (11a) und Magnetbeherbergungslöcher (13) hat; und
Stifte (26), die von der Platzierungsfläche (21c) vorstehen und mit unteren Flächen von Magneten (14) in Kontakt kommen, die in den Magnetbeherbergungslöchern (13) beherbergt sind,
die Spannvorrichtungsplatte (20) in der Lage ist, für Kernkörper (11, 111) von unterschiedlichen Typen verwendet zu werden, die eine gleiche Anzahl der Magnetbeherbergungslöcher (13, 113) haben, wobei die Kernkörper (11, 111) der unterschiedlichen Typen unterschiedliche Formen der Magnetbeherbergungslöcher (13, 113) und/oder unterschiedliche Positionen der Magnetbeherbergungslöcher (13, 113) haben, und
die Magnetbeherbergungslöcher (13, 113) der Kernkörper (11, 111) der unterschiedlichen Typen Regionen (A) haben, in denen die Magnetbeherbergungslöcher (13, 113) in der Axialrichtung der Kernkörper (11, 111) miteinander überlappen,
**dadurch gekennzeichnet, dass**
das Spannvorrichtungsplattengestaltungsverfahren ein Positionieren der Stifte (26) in den Regionen (A) aufweist.

2. Spannvorrichtungsplattengestaltungsverfahren gemäß Anspruch 1, wobei jede Region (A) eine längliche Form in einer Draufsicht hat,
eine Richtung senkrecht zu sowohl einer Längsrichtung von jeder Region (A) als auch der Axialrichtung in einer Draufsicht als eine Breitenrichtung definiert ist, und
das Spannvorrichtungsplattengestaltungsverfahren ein Anordnen von jedem Stift (26) bei einer Mitte in der Breitenrichtung einer entsprechenden der Regionen (A) aufweist.

3. Spannvorrichtungsplattengestaltungsverfahren gemäß Anspruch 1 oder 2, wobei
die Spannvorrichtungsplatte (20) einen Pfostenabschnitt (30) hat, der von dem Plattenkörper (21) vorsteht und in das Mittelloch (11a) eingesetzt wird, und
das Spannvorrichtungsplattengestaltungsverfahren des Weiteren ein Vorsehen, in einer Außenumfangsfläche des Pfostenabschnitts (30), eines Eingriffsabschnitts (31) aufweist, in den ein eingreifender Abschnitt (11b), der an einer Innenumfangsfläche des Mittellochs (11a) vorgesehen ist, eingesetzt wird.

## Revendications

1. Procédé de conception de plaque de gabarit permettant de concevoir une plaque de gabarit (20) utilisée pour un appareil de fabrication d'un noyau de rotor (10) d'un moteur à aimants permanents intérieurs, dans lequel
la plaque de gabarit (20) comporte :
un corps de plaque (21) comportant une surface de placement (21c) sur laquelle est placé un corps de noyau (11), le corps de noyau (11) comportant un trou central (11a) et des trous de logement d'aimants (13) ; et
des broches (26) qui font saillie à partir de la surface de placement (21c) et viennent en contact avec des surfaces inférieures d'aimants (14) logés dans les trous de logement d'aimants (13),
la plaque de gabarit (20) est apte à être utilisée pour des corps de noyau (11, 111) de différents types qui présentent un même nombre de trous de logement d'aimants (13, 113), les corps de noyau (11, 111) des différents types ayant des formes différentes des trous de logement d'aimants (13, 113) et/ou des positions différentes des trous de logement d'aimants (13, 113), et
les trous de logement d'aimants (13, 113) des corps de noyau (11, 111) des différents types présentent des régions (A) dans lesquelles les trous de logement d'aimants (13, 113) se chevauchent les uns les autres dans une direction axiale des corps de noyau (11, 111),
**caractérisé en ce que**
le procédé de conception de plaque de gabarit comprend le positionnement des broches (26) dans les régions (A).

2. Procédé de conception de plaque de gabarit selon la revendication 1, dans lequel chaque région (A) a une forme allongée en vue en plan,
une direction orthogonale à la fois à une direction longitudinale de chaque région (A) et à la direction axiale en vue en plan est définie comme étant une direction en largeur, et
le procédé de conception de plaque de gabarit comprend la disposition de chaque broche (26) au niveau d'un centre dans la direction en largeur d'une région correspondante parmi les régions (A).

3. Procédé de conception de plaque de gabarit selon la revendication 1 ou 2, dans lequel la plaque de gabarit (20) comporte une partie montant (30) qui fait saillie à partir du corps de plaque (21) et est insérée dans le trou central (11a), et
le procédé de conception de plaque de gabarit comprend en outre le fait de prévoir, dans une surface circonférentielle extérieure de la partie montant (30), une partie d'entrée en prise (31) dans laquelle est insérée une partie d'entrée en prise (11b) prévue sur une surface circonférentielle intérieure du trou central (11a).
